# EUROPÄISCHE PATENTSCHRIFT

(11) **EP 1 699 896 B1**
(45) Veröffentlichungstag und Bekanntmachung des Hinweises auf die Patenterteilung: **21.01.2009**
(21) Anmeldenummer: 04820842.5
(22) Anmeldetag: 16.11.2004
(51) Int. Cl.: C09J 151/00, C09J 153/00, C09J 7/02

(54) **VERWENDUNG EINER KLEBMASSE ZUR HERSTELLUNG VON CHEMISCH VERNETZTEN, DURCH ZUG IN RICHTUNG DER VERKLEBUNGSEBENE LÖSBAREN KLEBSTREIFEN**
USE OF AN ADHESIVE COMPOSITION FOR PRODUCING CHEMICALLY CROSSLINKED ADHESIVE STRIPS THAT CAN BE DETACHED BY PULLING IN THE DIRECTION OF THE PLANE OF ADHESION
UTILISATION DE COMPOSITIONS ADHÉSIVES POUR LA FABRICATION DE BANDES ADHÉSIVES RÉTICULÉES CHIMIQUEMENT POUVANT ETRE DÉTACHÉES PAR TRACTION DANS LE SENS DU PLAN D'ADHÉSION

(30) Priorität: 23.12.2003 DE 10361540
(43) Veröffentlichungstag der Anmeldung: 13.09.2006
(73) Patentinhaber: tesa AG, 20253 Hamburg (DE)
(72) Erfinder: KRAWINKEL, Thorsten, 22457 Hamburg (DE)
(86) Internationale Anmeldenummer: PCT/EP2004/052976
(87) Internationale Veröffentlichungsnummer: WO 2005/063913

(56) Entgegenhaltungen:
- WO-A-01/92344
- US-A- 5 623 010
- US-A1- 2002 197 470

## Beschreibung

Die Erfindung betrifft die Verwendung einer Klebmasse für die Herstellung von ein- oder beidseitigen Klebfolienstreifen, welche sich durch dehnendes Verstrecken in der Verklebungsebene rückstands- und zerstörungsfrei wiederablösen lassen und die auch unter erhöhter Temperatur gute Klebeigenschaften besitzen.

Elastisch oder plastisch hochdehnbare Selbstklebebänder, welche sich durch dehnendes Verstrecken in der Verklebungsebene rückstands- und zerstörungsfrei wieder ablösen lassen, sind beispielsweise aus der US 4,024,312 A, DE 33 31 016 C2, WO 92/11332 A1, WO 92/11333 A1, DE 42 22 849 A1, WO 95/06691 A1, DE 195 31 696 A1, DE 196 26 870 A1, DE 196 49 727 A1, DE 196 49 728 A1, DE 196 49 729 A1, DE 197 08 364 A1, DE 197 20 145 A1, DE 198 20 858 A1, WO 99/37729 A1 und DE 100 03 318 A1 bekannt und werden nachfolgend auch als stripfähige Selbstklebebänder bezeichnet.

Eingesetzt werden solche stripfähigen Selbstklebebänder häufig in Form von ein- oder beidseitig haftklebrigen Klebfolienstreifen, die bevorzugt einen nicht haftklebrigen Anfassbereich aufweisen, von welchem aus der Ablöseprozess eingeleitet wird. Besondere Anwendungen entsprechender Selbstklebebänder finden sich unter anderem in DE 42 33 872 A1, DE 195 11 288 A1, US 5,507,464 A, US 5,672,402 A und WO 94/21157 A1. Spezielle Ausführungsformen sind auch in der DE 44 28 587 A1, DE 44 31 914 A1, WO 97/07172 A1, DE 196 27 400 A1, WO 98/03601 A1 und DE 196 49 636 A1, DE 197 20 526 A1, DE 197 23 177 A1, DE 197 23 198 A1, DE 197 26 375 A1, DE 197 56 084 A1, DE 197 56 816 A1, DE 198 42 864 A1, DE 198 42 865 A1, WO 99/31193 A1, WO 99/37729 A1, WO 99/63018 A1, WO 00/12644 A1, und DE 199 38 693 A1 beschrieben.

Bevorzugte Einsatzgebiete vorgenannter stripfähiger Klebfolienstreifen beinhalten insbesondere die rückstands- und zerstörungsfrei wieder ablösbare Fixierung leichter bis mittelschwerer Gegenstände im Wohn-, Arbeits- und Bürobereich. Sie ersetzen hierbei klassische Befestigungsmittel wie zum Beispiel Stecknadeln, Pin-Nadeln, Heftzwecken, Nägel, Schrauben, klassische Selbstklebebänder und Flüssigklebstoffe. Wesentlich für den erfolgreichen Einsatz der oben genannten Klebfolienstreifen ist neben der Möglichkeit des rückstands- und zerstörungsfreien Wiederablösens verklebter Gegenstände deren einfache und schnelle Verklebung sowie für die vorgesehene Verklebungsdauer deren sicherer Halt. Hierbei ist insbesondere zu berücksichtigen, dass die Funktionsfähigkeit der Klebestreifen auf einer Vielzahl von Substraten gegeben sein muss, um als Universalfixierung im Wohn-, Arbeits- und Bürobereich dienen zu können.

Obwohl in der oben zitierten Patentliteratur eine breite Palette von Haftklebemassen für die Verwendung in stripfähigen Selbstklebebändern beschrieben werden, weisen aktuell im Markt befindliche Handelsprodukte (zum Beispiel tesa^{™} Powerstrips^{™} der tesa AG, 3M Command^{™} Adhesive Klebstreifen der Firma 3M, Plastofix^{™} Formuli Force 1000 Klebestreifen der Firma Plasto S. A. sowie die entsprechenden Klebestreifen der Firma Nitoms) sämtlich Haftklebemassen auf Basis von Styrolblockcopolymeren meistens mit im Elastomerblock ungesättigten Polydienblöcken auf. Typischerweise finden lineare oder radiale Blockcopolymere auf Basis von Polystyrolblöcken und Polybutadienblöcken und/oder Polyisoprenblöcken Verwendung, also zum Beispiel radiale Styrol-Butadien-(SB)ₙ und/oder lineare Styrol-Butadien-Styrol (SBS)- und/oder lineare Styrol-Isopren-Styrolblockcopolymere (SIS). Vorteile der vorgenannten styrolblockcopolymerbasierenden Haftklebemassen für den Einsatz in stripfähigen Selbstklebebändern sind zum Beispiel die mit ihnen erreichbaren hohen Verklebungsfestigkeiten (bedingt unter anderem durch die gleichzeitige Realisierung einer hohen Kohäsion und hoher Klebkräfte), eine ausgeprägte Reduzierung der Klebrigkeit beim verstreckenden Ablösen (welches den Ablöseprozess deutlich erleichtert oder gar erst ermöglicht) sowie eine hohe Zugfestigkeit, welche insbesondere für einen reißerfreien Ablöseprozess wesentlich ist.

Die im Markt befindlichen Produkte, welche sämtlich Haftklebemassen auf Basis von Styrolblockcopolymeren nutzen, zeigen Schwächen sowohl bei der Verklebung schwerer Gegenstände als auch bei der Verklebungsfestigkeit bei Temperaturen oberhalb von 50 °C. Durch ein Erweichen der vornehmlich aus Polystyrol bestehenden Hartphasen (Blockpolystyroldomänen) kommt es insbesondere bei der Verklebung von mittelschweren Gegenständen zum kohäsiven Versagen der Haftklebestreifen.

Ein Versagen der Verklebung tritt besonders bei einer Kippscherbelastung (bei der ein Drehmoment wirksam ist, wie zum Beispiel bei der Verklebung eines Hakens) deutlich stärker auf als bei einer reinen Scherbelastung.

Vernetzbare stripfähige Klebmassen sind bekannt aus DE 198 33 174 C2 und DE 102 12 049 A1. Die Vernetzung in DE 102 12 049 A1 erfolgt über eine Strahlung, entweder UV-oder Elektronenstrahlung. Eine Vernetzung über Chelate ist nicht genannt. DE 198 33 174 C2 beschreibt eine chemische Vernetzung, allerdings werden nur Harze vernetzt, eine Vernetzung der Elastomere findet nicht statt.

Eine Vernetzung von maleinsäureanhydridmodifizierten Blockcopolymeren mit Chelaten ist bekannt aus EP 1 311 559 A2, bei der eine Steigerung der Kohäsion der Blockcopolymermischungen beschrieben wird. Eine Möglichkeit, Klebebänder herzustellen, die mit dem beschriebenen Mechanismus vernetzt werden, und gleichzeitig durch dehnendes Verstrecken in Richtung der Verklebungsebene aus der Klebfuge gelöst werden können ist nicht erwähnt.

Weiterhin sind Chelatvernetzungen mit zum Beispiel säuremodifizierten Acrylatklebemassen bekannt, zum Beispiel aus US 4,005,247 A oder US 3,769,254 A.

Aufgabe der Erfindung ist es daher, eine weitere Verwendung von Klebmassen auf der Basis von Vinylaromatenblockcopolymeren für Klebfolienstreifen zu schaffen.

Die Aufgabe wird mit der Verwendung einer gattungsgemäßen Klebmasse erfindungsgemäß gelöst, wie sie im Hauptanspruch niedergelegt ist. Gegenstand der Unteransprüche sind dabei vorteilhafte Weiterbildungen der Klebmasse.

Demgemäß betrifft die Erfindung die Verwendung einen Klebemasse für die Herstellung eines Klebfolienstreifens welcher sich durch dehnendes verstrecken in Richtung der Klebefuge lösen lässt, enthaltend ein Gemisch aus
- einem säure- oder säureanhydridmodifizierten Vinylaromatenblockcopolymer,
- einem Metallchelat der folgenden Formel:

   (R₁O)ₙ M (XR₂Y)ₘ,

   wobei
   M ein Metall der 2. 3. 4. oder 5. Hauptgruppe oder ein Übergangsmetall ist;
   R₁ eine Alkyl- oder Arylgruppe ist;
   n Null oder eine größere ganze Zahl ist,
   X und Y Sauerstoff oder Stickstoff sind, die jeweils auch durch eine Doppelbindung an R₂ gebunden sein können;
   R₂ eine X und Y verbindende Alkylengruppe ist, die verzweigt sein kann, oder auch Sauerstoff oder weitere Heteroatome in der Kette enthalten kann;
   m eine ganze Zahl, mindestens jedoch 1 ist,
- sowie einem Klebharz,
wobei sich der Klebfolienstreifen durch dehnendes Verstrecken in Richtung der Klebfuge lösen lässt.

Durch die Vernetzung, die durch die Anlagerung der Chelatgruppen an die Säurebeziehungsweise Anhydridgruppen geschieht, werden die kohäsiven Eigenschaften deutlich verbessert, besonders bei erhöhten Temperaturen. Überraschenderweise hat sich gezeigt, dass trotz dieser chemischen Vernetzung die Stripfähigkeit beibehalten wird. Trotz der hohen Verklebungsleistung ist es möglich, die Haftklebebänder durch Ziehen in Richtung der Verklebungsebene wieder aus der Klebfuge zu lösen.

Damit stripfähige Klebebänder leicht und rückstandsfrei wieder abgelöst werden können, müssen sie bestimmte mechanische Eigenschaften besitzen. Das Verhältnis der Reißkraft und der Stripkraft muss größer als zwei, bevorzugt größer als drei sein. Dabei ist die Stripkraft diejenige Kraft, die aufgewendet werden muss, um einen Klebestreifen aus einer Klebfuge durch paralleles Ziehen in Richtung der Verklebungsebene wieder zu lösen. Das Verhältnis von Stripkraft und Reißkraft wird stark durch die Dicke der Klebestreifen beeinflusst, da die zum Ablösen benötigte Abzugskraft sich aus der Kraft zusammensetzt, welche für das Ablösen des Klebebandes von den Verklebungsuntergründen nötig ist, und der Kraft, welche zur Verformung des Klebebandes aufgewendet werden muss. Die zur Verformung des Klebebandes erforderliche Kraft ist annähernd der Dicke des Klebebandes proportional. Die zum Ablösen benötigte Abzugskraft kann im betrachteten Dickenbereich vereinfacht als konstant angenommen werden. Die Reißfestigkeit steigt hingegen proportional zu der Dicke der Klebestreifen an. Hieraus folgt, dass für Klebebänder mit einem Einschichtaurfbau, wie in der DE 33 31 016 C2 offenbart, die Reißfestigkeit unterhalb einer bestimmten Dicke kleiner als die Abzugskraft wird. Oberhalb einer bestimmten Dicke wird das Verhältnis von Abzugskraft zur Stripkraft hingegen größer als zwei. Wenn die Reißkraft der eingesetzten Polymere aber sehr niedrig ist, folgt daraus, dass die Dicke sehr groß werden muss, wodurch auch die Stripkräfte ansteigen. Um zu vermeiden, dass die zum Strippen benötigte Kraft zu groß wird, sollte die Stripkraft pro Klebestreifen jedoch nicht größer als 30 N sein.

Anstatt in einem Einschichtaufbau, bei dem der gesamte Klebestreifen aus Klebmasse besteht, lassen sich die Klebmassen auch in Mehrschichtaufbauten mit einem Zwischenträger einsetzen. Dabei sind sowohl überwiegend elastische Träger, wie sie zum Beispiel in US 4,024,312 A oder DE 197 08 366 A1 beschrieben sind, als auch überwiegend plastische Träger, wie in WO 92/11333 A1 oder zum Beispiel DE 196 49 727 A1 beschrieben, möglich.

Auch einseitig klebrige Klebebänder, die nur auf einer Seite eines Trägers eine Klebmasseschicht besitzen sind möglich. Auch Klebebänder, die zwar doppelseitig mit Klebmasse ausgerüstet sind, aber auf beiden Seiten des Trägers eine unterschiedliche Klebmasse tragen, sind denkbar. Diese Klebebänder können besonders gut für die Verklebung zweier sehr unterschiedlicher Materialien eingesetzt werden, wobei die beiden Klebmassen dann genau auf den jeweiligen Untergrund abgestimmt sein können. Als Klebmassen finden bevorzugt solche auf Basis von Blockcopolymeren enthaltend Polymerblöcke überwiegend gebildet von Vinylaromaten (A-Blöcke), bevorzugt Styrol, und solchen überwiegend gebildet durch Polymerisation von 1,3-Dienen (B-Blöcke), bevorzugt Butadien und Isopren Anwendung. Sowohl Homo- als auch Copolymerblöcke sind erfindungsgemäß nutzbar. Resultierende Blockcopolymere können gleiche oder unterschiedliche B-Blöcke enthalten, die teilweise oder selektiv hydriert sein können. Blockcopolymere können eine lineare A-B-A-Struktur aufweisen. Einsetzbar sind ebenfalls Blockcopolymere von radialer Gestalt sowie sternförmige und lineare Multiblockcopolymere. Als weitere Komponenten können A-B-Zweiblockcopolymere vorhanden sein. Sämtliche der vorgenannten Polymere können alleine oder im Gemisch miteinander genutzt werden.

Zumindest ein Teil der eingesetzten Blockcopolymere muss dabei säure- oder säureanhydridmodifiziert sein, wobei die Modifizierung hauptsächlich durch radikalische Pfropfcopolymerisation von ungesättigten Mono- und Polycarbonsäuren oder -säureanhydriden, wie zum Beispiel Fumarsäure, Itaconsäure, Citraconsäure, Acrylsäure, Maleinsäureanhydrid, Itaconsäureanhydrid oder Citraconsäureanhydrid, bevorzugt Maleinsäureanhydrid erfolgt. Bevorzugt liegt der Anteil an Säure beziehungsweise Säureanhydrid zwischen 0,5 und 4 Gew.-% bezogen auf das gesamte Blockcopolymer.

Kommerziell sind solche Blockcopolymere zum Beispiel unter dem Namen Kraton^{™} FG 1901 und Kraton^{™} FG 1924 der Firma Shell, beziehungsweise Tuftec^{™} M 1913 und Tuftec^{™} M 1943 der Firma Asahi erhältlich.

Die Haftklebemasse hat vorzugsweise einen Anteil von 20 bis 70 Gew.-% von Styrolblockcopolymer, vorzugsweise 30 bis 60 Gew.-%, und besonders bevorzugt 35 bis 55 Gew.-%, wobei nicht der gesamte Anteil an Blockcopolymeren anhydridmodifiziert vorliegen muss.

Neben den schon genannten säure- oder säureanhydridmodifizierten Vinylaromatenblockcopolymeren können auch noch weitere Säuren oder Säureanhydride zugesetzt werden, um einen höheren Vernetzungsgrad und damit eine noch weiter verbesserte Kohäsion zu erreichen. Dabei sind sowohl monomere Säureanhydride und Säuren wie in US 3,970,608 A beschrieben als auch säure- oder säureanhydridmodifizierte Polymere als auch säureanhydridenthaltende Copolymere wie Polyvinylmethylether-maleinsäureanhydrid-Copolymere, zum Beispiel zu beziehen unter dem Namen Gantrez^{™}, vertrieben von der Firma ISP, einsetzbar.

Als Klebrigmacher nutzen erfindungsgemäße Klebmassen als Hauptkomponente insbesondere Klebharze, die mit dem Elastomerblock der Vinylaromatenblockcopolymere verträglich sind.

Bevorzugt geeignet sind unter anderem nicht hydrierte, partiell- oder vollständig hydrierte Harze auf Basis von Kolophonium und Kolophoniumderivaten, hydrierte Polymerisate des Dicyclopentadiens, nicht hydrierte, partiell, selektiv oder vollständig hydrierte Kohlenwasserstoffharze auf Basis von C₅-, C₅/C₉- oder Cg-Monomerströmen, Polyterpenharze auf Basis von α-Pinen und/oder β-Pinen und/oder δ-Limonen, hydrierte Polymerisate von bevorzugt reinen C₈- und C₉-Aromaten. Vorgenannte Klebharze können sowohl allein als auch im Gemisch eingesetzt werden.

Als weitere Additive können typischerweise genutzt werden:
- primäre Antioxidanzien, wie zum Beispiel sterisch gehinderte Phenole
- sekundäre Antioxidanzien, wie zum Beispiel Phosphite oder Thioether
- Prozessstabilisatoren, wie zum Beispiel C-Radikalfänger
- Lichtschutzmittel, wie zum Beispiel UV-Absorber oder sterisch gehinderte Amine
- Verarbeitungshilfsmittel
- Endblockverstärkerharze
- Füllstoffe, wie zum Beispiel Siliziumdioxid, Glas (gemahlen oder in Form von Kugeln), Aluminiumoxide, Zinkoxide, Calciumcarbonate, Titandioxide, Ruße, etc. ebenso wie Farbpigmente und Farbstoffe sowie optische Aufheller
- gegebenenfalls weitere Polymere von bevorzugt elastomerer Natur; entsprechend nutzbare Elastomere beinhalten unter anderem solche auf Basis reiner Kohlenwasserstoffe, zum Beispiel ungesättigte Polydiene, wie natürliches oder synthetisch erzeugtes Polyisopren oder Polybutadien, chemisch im wesentlichen gesättigte Elastomere, wie zum Beispiel gesättigte Ethylen-Propylen-Copolymere, α-Olefincopolymere, Polyisobutylen, Butylkautschuk, Ethylen-Propylenkautschuk sowie chemisch funktionalisierte Kohlenwasserstoffe, wie zum Beispiel halogenhaltige, acrylathaltige oder vinyletherhaltige Polyolefine, um nur einige wenige zu nennen.

Plastifizierungsmittel, wie zum Beispiel Flüssigharze, Weichmacheröle oder niedermolekulare flüssige Polymere, wie zum Beispiel niedermolekulare Polybutene mit Molmassen < 1500 g/mol (Zahlenmittel), werden lediglich in sehr geringen Mengen von ≤ 10 Gew.-% eingesetzt, bevorzugt wird auf ihre Verwendung vollständig verzichtet.

Die Haftklebrigkeit der Haftklebemasse kann optional erst durch thermische Aktivierung oder durch Lösemittelaktivierung erzeugt werden.

Die Metalle der Metallchelate können die der 2. 3. 4. und 5. Hauptgruppe und die Übergangsmetalle sein. Besonders geeignet sind zum Beispiel Aluminium, Zinn, Titan, Zirkonium, Hafnium, Vanadium, Niob, Chrom, Mangan, Eisen, Kobalt, und Cer. Besonders bevorzugt sind Aluminium und Titan.

Die Metallchelate werden durch die folgende Formel wiedergegeben:

**(R₁O)ₙ M (XR₂Y)ₘ,**

wobei
M ein Metall wie oben beschrieben ist;
R₁ eine Alkyl- oder Arylgruppe wie Methyl, Ethyl, Butyl, Isopropyl oder Benzyl ist;
n null oder eine größere ganze Zahl ist,
X und Y Sauerstoff oder Stickstoff sind, die jeweils auch durch eine Doppelbindung an R₂ gebunden sein können;
R₂ eine X und Y verbindende Alkylengruppe ist, die verzweigt sein kann, oder auch Sauerstoff oder weitere Heteroatome in der Kette enthalten kann;
m eine ganze Zahl, mindestens jedoch 1 ist.

Bevorzugte Chelatliganden sind solche, die aus der Reaktion folgender Verbindungen entstanden sind: Triethanolamin, 2,4-Pentandion, 2-Ethyl-1,3-Hexandiol oder Milchsäure.

Besonders bevorzugte Vernetzer sind Aluminium- und Titanacetylacetonate.

Dabei sollte ein annähernd äquivalentes Verhältnis zwischen den Säurebeziehungsweise Säureanhydridgruppen und den Acetylacetonatgruppen gewählt werden, um eine optimale Vernetzung zu erreichen, wobei sich ein kleiner Überschuss an Vernetzer als positiv herausgestellt hat.

Das Verhältnis zwischen Anhydridgruppen und Acetylacetonatgruppen kann aber variiert werden, dabei sollte für eine ausreichende Vernetzung keine der beiden Gruppen in mehr als einem fünffachen molaren Überschuss vorliegen.

Die Herstellung und Verarbeitung der Haftklebemassen kann sowohl aus der Lösung, als auch aus der Schmelze erfolgen. Besonders bevorzugt ist jedoch die Fertigung der Haftklebemassen aus der Schmelze, wobei insbesondere Batchverfahren als auch kontinuierliche Verfahren eingesetzt werden können. Besonders vorteilhaft ist die kontinuierliche Fertigung der Haftklebemassen mit Hilfe eines Extruders, wobei das Acetylacetonat möglichst am Ende des Prozesses zugegeben wird.

Die Klebmassen können sowohl für einseitig als auch für beidseitig - klebrige durch dehnendes Verstrecken rückstandsfrei und zerstörungsfrei wiederablösbare Klebebänder genutzt werden. Einseitige Klebebänder können hierbei zum Beispiel durch einseitige Inertisierung zuvor genannter beidseitig klebriger Klebebänder erhalten werden, beziehungsweise durch einseitige Beschichtung eines hoch dehnbaren Trägers.

Die entstandenen Klebfolien können als Klebebandrollen, Klebestreifen oder Stanzlinge konfektioniert werden. Optional kann ein nicht klebriger Anfasserbereich vorgesehen sein, von welchem aus der Ablöseprozess ausgeführt werden kann.

Nachfolgend werden einige Beispiele für vernetzte stripfähige Klebmassen aufgeführt.

Die Haftklebemassen wurden hierbei in einem heizbaren Kneter mit Sigma-Schaufel (Werner und Pfleiderer LUK 1,0 K3 ausgerüstet mit einem Thermostaten LTH 303 der Firma mgw LAUDA) bei einer Temperatur von ca. +160 bis +180 °C und unter Inertisierung mit CO₂ als Schutzgas zu einer homogenen Mischung verarbeitet. Der Vernetzer wurde als letzte Komponente erst kurz vor dem Ende des Knetvorgangs zugegeben. Nach dem Erkalten wurden durch ca. 10-minütiges Verpressen der Klebmasse bei +120 °C bis +140 °C in einer temperierbaren Presse (Typ KHL 50 der Firma Bucher-Guyer) einschichtige Klebstofffolienstücke der Dicke von 700 µm ± 50 µm (Mittelwert ± 2-fache Standardabweichung) hergestellt.

Durch Ausstanzen werden einschichtige Haftklebestreifen der gewünschten Abmessungen erhalten. Zur Herstellung mehrschichtiger Haftklebestreifen können die entsprechenden Schichten zuvor durch Kaschierung (gegebenenfalls durch Heißkaschierung) verbunden und danach die Klebestreifen durch Ausstanzen vereinzelt werden.

Im Folgenden wird die Erfindung anhand von Beispielen näher erklärt.

### Beispiel 1

| | | |
|---|---|---|
| 20 Teile | Kraton^{™} FG 1901 der Firma Kraton | Maleinsäureanhydridmodifiziertes SEBS |
| 80 Teile | Kraton^{™} FG 1924X der Firma Kraton | Maleinsäureanhydridmodifiziertes SEBS |
| 100 Teile | Escorez^{™} 5600 | hydriertes Kohlenwasserstoffharz der Firma Dexco |
| 4 Teile | Aluminiumacetylacetonat | |

### Vergleichsbeispiel 2

Das gleiche Beispiel wie Beispiel 1 nur ohne Aluminiumacetylacetonat.

Bei den Haftklebestreifen mit den beispielhaften Haftklebegemischen wurden die folgenden mechanischen und klebtechnischen Daten ermittelt:

| Haftklebemasse Beispiel Nr. | Zugfestigkeit in MPa | Strip-Spannung in MPa | Schälgeschwindigkeit in mm/24 h | Versagenstemperatur in °C |
|---|---|---|---|---|
| 1 | 7,8 | 1,1 | 19 | >180 |
| 2 | 7,5 | 0,9 | 15 | 88 |

Trotz der Vernetzung während der Herstellung war die Klebmasse 1 noch stripfähig. Die mechanischen Eigenschaften bei Raumtemperatur ändern sich durch die Vernetzung nur geringfügig.

Allerdings ändern sich die kohäsiven Eigenschaften bei erhöhten Temperaturen beträchtlich. Während das Vergleichsbeispiel schon bei 88 °C kohäsiv versagt, gibt es bei Beispiel 1 kein Versagen bis 180 °C. Die Wärmestabilität ist also deutlich erhöht.

Die mechanischen und klebtechnischen Daten wurden wie folgt ermittelt:
Die Zugfestigkeit beziehungsweise maximale Dehnung wurde in Anlehnung an DIN 53504 unter Verwendung von Schulterstäben der Größe S3 bei einer Separationsgeschwindigkeit von 300 mm pro Minute gemessen.

Die Ablösekraft (Stripkraft beziehungsweise Stripspannung) wurde mit Hilfe einer Klebstofffolie mit den Abmessungen 50 mm Länge x 20 mm Breite mit einem am oberen Ende nicht klebrigen Anfasserbereich ermittelt. Die Klebstofffolie wurde zwischen zwei deckungsgleich zueinander angeordneten Stahlplatten mit einer Abmessung von 50 mm x 30 mm mit einem Anpressdruck von jeweils 50 Newton verklebt. Zur Vernetzung wurden die Stahlplatten bei 200 °C für 5 min gepresst. Die Stahlplatten haben an ihrem unteren Ende je eine Bohrung zur Aufnahme eines S-förmigen Stahlhakens. Das untere Ende des Stahlhakens trägt eine weitere Stahlplatte, über welche die Prüfanordnung zur Messung in der unteren Klemmbacke einer Zugprüfmaschine fixiert werden kann. Die Verklebungen werden für eine Dauer von 24 Stunden bei +40 °C gelagert. Nach der Rekonditionierung auf Raumtemperatur wird der Klebfolienstreifen mit einer Zuggeschwindigkeit von 1000 mm pro Minute parallel zur Verklebungsebene und kontaktfrei zu den Kantenbereichen der beiden Stahlplatten herausgelöst. Dabei wird die erforderliche Ablösekraft in Newton (N) gemessen. Angegeben wird der Mittelwert der Stripspannungswerte (in N pro mm²), gemessen in dem Bereich, in welchem der Klebestreifen auf einer Verklebungslänge zwischen 10 mm und 40 mm von den Stahluntergründen abgelöst ist.

Zur Ermittlung der Schälfestigkeit werden die zu untersuchenden Haftklebestreifenmuster einseitig vollflächig mit einer 23 µm starken PET-Folie (beispielsweise Hostaphan RN 25; Mitsubishi Chemicals) luftblasenfrei einkaschiert. Danach wird die zweite Klebfolienstreifenseite an einem Ende mit einem ca. 6 mm langen Folienstreifen (ebenfalls Hostaphan RN 25) abgedeckt, so dass an diesem Ende ein beidseitig nicht haftklebriger Anfasserbereich entsteht. Hiernach wird der zu prüfende Klebfolienstreifen vorderseitig mit leichtem Fingerandruck auf den Prüfuntergrund (gestrichene Raufasertapete: Tapete = Erfurt Körning 52, Farbe = Herbol Zenit LG, Tapete verklebt auf Pressspanplatte) aufgeklebt. Die Haftklebefolienmuster werden anschließend 10 Sekunden lang bei einem Anpressdruck von 90 N pro 10 cm² Haftklebefläche angedrückt. Danach werden die Haftklebemuster 15 Minuten bei 40 °C konditioniert. Die Prüfplatten werden anschließend horizontal fixiert, so dass der anfassbare Bereich der Klebestreifen nach unten gerichtet ist. An den nicht klebenden Anfasser wird mit Hilfe einer Klemme ein Gewicht von 20 g befestigt, so dass die entstehende Schälbelastung (ca. 0,2 N pro 20 mm Klebstreifenbreite) orthogonal zur Verklebungsebene wirkt. Nach einer Testphase von 15 Minuten und wiederholt nach 24 Stunden wird diejenige Strecke markiert, die der Klebestreifen vom Verklebungsuntergrund seit Versuchsbeginn abgeschält ist. Der Abstand zwischen den beiden Markierungen wird als Schälweg (Einheit: mm pro 24 Stunden) angegeben.

Zur Bestimmung des Thermoscherweges wird die zu prüfende Klebstofffolie der Abmessung 10 mm x 50 mm auf eine kleinere Stahlplatte geklebt, so dass die Verklebungsfläche 10 mm x 13 mm beträgt. Auf der Rückseite der Klebstofffolie wird eine 23 µm starke PET-Folie kaschiert. Nach Anrollen der Klebstofffolie mit einer 2 Kg-Rolle wird die Stahlplatte senkrecht aufgehängt und ein 200 g Gewicht an die Klebstofffolie gehängt. Anschließend wird die Stahlplatte mit einer Heizrate von 2 °C pro Minute erwärmt. Es wird die Scherung der Klebstofffolie in mm gemessen. Die Klebstofffolie gilt als abgefallen, wenn der Scherweg größer als 2.500 µm ist. Die Temperatur bei dieser Scherung ist die Versagenstemperatur.

## Patentansprüche

1. Verwendung einer Klebemasse zur Herstellung eines ein- und/oder beidseitigen Klebefollenstreifens, welcher sich durch dehnendes Verstrecken in Richtung der Klebefuge lösen lässt, enthaltend ein Gemisch aus einem säure- oder säureanhydridmodifizierten Vinylaromatenblockcopolymer, einem Metallchelat der folgenden Formel:
(R₁O)ₙ M (XR₂Y)ₘ,
wobei
M ein Metall der 2. 3. 4. oder 5. Hauptgruppe oder ein Übergangsmetall ist;
R₁ eine Alkyl- oder Arylgruppe ist:
n Null oder eine größere ganze Zahl ist,
X und Y Sauerstoff oder Stickstoff sind, die jeweils auch durch eine Doppelbindung an R2 gebunden sein können:
R₂ eine X und Y verbindende Alkylengruppe ist, die verzweigt sein kann, oder auch Sauerstoff oder weitere Heteroatome in der Kette enthalten kann;
m eine ganze Zahl, mindestens jedoch 1 ist,
sowie einem Klebharz.

2. Verwendung nach Anspruch 1, **dadurch gekennzeichnet, dass** die Vinylaromatenblockcopolymere Polystyrolendblöcke besitzen.

3. Verwendung nach Anspruch 1 oder 2, **dadurch gekennzeichnet, dass** die Klebmasse weitere Elastomere und/oder weitere Säuren oder Säureanhydride enthält.

4. Verwendung nach zumindest einem der Ansprüche 1 bis 3, **gekennzeichnet durch** einen Anteil von 20 bis 70 Gew.-%, vorzugsweise 30 bis 60 Gew.-%, und besonders bevorzugt 35 bis 55 Gew.-%, von Vinylaromatenblockcopolymer bezogen auf die gesamte Klebmasse.

5. Verwendung nach zumindest einem der vorhergehenden Ansprüche, **dadurch gekennzeichnet, dass** die Klebmasse weitere Abmischkomponenten enthält, insbesondere Weichmacher, Alterungsschutzmittel, Verarbeitungshilfsmittel, Füllstoffe, Farbstoffe, optische Aufheller, Stabilisatoren.

6. Verwendung nach zumindest einem der vorhergehenden Ansprüche, **dadurch gekennzeichnet, dass** es sich bei den Metallchelaten um Acetylacetonate handelt.

7. Verwendung nach Anspruch 6, **dadurch gekennzeichnet, dass** der Klebfolienstreifen einen dehnbaren Zwischenträger besitzt.

## Claims

1. Use of an adhesive for producing a single- and/or double-sided adhesive film strip which is detachable by extensive stretching in the direction of the bondline, comprising a mixture of an acid-modified or acid anhydride-modified vinylaromatic block copolymer, a metal chelate of the following formula:
(R₁O)ₙ M (XR₂Y)ₘ,
where
M is a metal from main group 2, 3, 4 or 5 or a transition metal;
R₁ is an alkyl or aryl group;
n is zero or a greater whole number;
X and Y are oxygen or nitrogen, and may each also be attached through a double bond to R2;
R₂ is an alkylene group connecting X and Y and may be branched, or else may contain oxygen or other heteroatoms in the chain;
m is a whole number, but at least 1;
and a tackifier resin.

2. Use according to claim 1, **characterized in that** the vinylaromatic block copolymers possess polystyrene endblocks.

3. Use according to claim 1 or 2, **characterized in that** the adhesive comprises further elastomers and/or further acids or acid anhydrides.

4. Use according to at least one of claims 1 to 3, **characterized by** a fraction of 20% to 70%, preferably 30% to 60%, and more preferably 35% to 55% by weight of vinylaromatic block copolymer, based on the adhesive as a whole.

5. Use according to at least one of the preceding claims, **characterized in that** the adhesive comprises further blend components, especially plasticizers, aging inhibitors, processing aids, fillers, dyes, optical brighteners, stabilizers.

6. Use according to at least one of the preceding claims, **characterized in that** the metal chelates are acetylacetonates.

7. Use according to claim 6, **characterized in that** the adhesive film strip possesses an extensible carrier in between.

## Revendications

1. Utilisation d'une masse adhésive pour la réalisation d'une bande de feuille adhésive monoface et/ou double face, qui peut être détachée par un étirage avec élongation dans le sens du joint adhésif, contenant un mélange
- d'un copolymère à blocs d'aromatiques de vinyle modifié par un acide ou un anhydride d'acide,
- d'un chélate métallique présentant la formule suivants :
(R₁O)ₙM(XR₂Y)ₘ,
où
M représente un métal du 2ème, 3ème, 4ème ou 5ème groupe principal ou un métal de transition ;
R₁ représente un groupe alkyle ou aryle ;
n vaut zéro ou un nombre entier plus grand,
X et Y représentent oxygène ou azote, qui peuvent également être liés à chaque fois par une double liaison à R₂ ;
R₂ représente un groupe alkylène reliant X et Y, qui peut être ramifié ou également contenir de l'oxygène ou d'autres hétéroatomes dans la chaîne ;
m vaut un nombre entier, généralement cependant 1,
ainsi qu'une résine adhésive.

2. Utilisation selon la revendication 1, **caractérisée en ce que** les copolymères à blocs d'aromatiques de vinyle présentent des blocs terminaux de polystyrène.

3. Utilisation selon la revendication 1 ou 2, **caractérisée en ce que** la masse adhésive contient d'autres élastomères et/ou d'autres acides ou anhydrides d'acide.

4. Utilisation selon au moins l'une quelconque des revendications 1 à 3, **caractérisée par** une proportion de 20 à 70% en poids, de préférence de 30 à 60% en poids et de manière particulièrement préférée de 35 à 55% en poids, de copolymère à blocs d'aromatiques de vinyle par rapport à la totalité de la masse adhésive.

5. Utilisation selon au moins l'une quelconque des revendications précédentes, **caractérisée en ce que** la masse adhésive contient d'autres composants dans le mélange, en particulier des plastifiants, des agents de protection contre le vieillissement, des adjuvants de transformation, des charges, des colorants, des azurants optiques, des stabilisateurs.

6. Utilisation selon au moins l'une quelconque des revendications précédentes, **caractérisée en ce qu'**il s'agit, pour les chélates métalliques, d'acétylacétonates.

7. Utilisation selon la revendication 6, **caractérisée en ce que** la bande de feuille adhésive présente un support intermédiaire extensible.
